Europäisches Patentamt

European Patent Office

Office européen des brevets

(11) Numéro de publication: **0 307 339**
**A1**

(12) **DEMANDE DE BREVET EUROPEEN**

(21) Numéro de dépôt: **88470014.7**

(22) Date de dépôt: **15.07.88**

(51) Int. Cl.⁴: **B 60 R 22/44**

(30) Priorité: **08.09.87 FR 8710506**

(43) Date de publication de la demande:
**15.03.89 Bulletin 89/11**

(84) Etats contractants désignés: **DE ES GB IT**

(71) Demandeur: **Martin, Jean Charles**
**2, rue de Verdun**
**F-57160 Chatel Saint Germain (FR)**

(72) Inventeur: **Martin, Jean Charles**
**2, rue de Verdun**
**F-57160 Chatel Saint Germain (FR)**

(54) **Ceinture de securité auto règlable par boutons pressions.**

㊐ La présente invention concerne un dispositif permettant le règlage des ceintures de sécurité pour automobiles, par boutons-pression. (15). Il a pour but de supprimer la pression de la ceinture sur la poitrine des passagers.

Le support de ceinture fixé sur le montant séparant les portières avant (12) et arrière à mi-hauteur des vitres, comporte un "guide de passage de ceinture" représenté par un orifice rectangulaire avec une encoche d'un seul côté (14). Ce "guide de passage de ceinture" forme un T dont le pied est très court.

Lorsque les boutons-pression seront abaissés, la ceinture deviendra mobile dans la mesure où les boutons-pression ne supporteront pas de gêne pour leur mobilité, du fait qu'ils coulissent dans l'encoche.

Dans la mesure où un de ces boutons sera relevé, il se présentera au niveau de l'orifice à l'opposé de l'encoche et bloquera la glisse de la ceinture (17). L'utilisateur utilisera un de ces divers boutons-pression à son choix et à sa convenience pour fixer le niveau de blocage de la ceinture. (16)

FIG.4

**Description**

## CEINTURE DE SECURITE AUTOMOBILE REGLABLE PAR BOUTONS PRESSION

La presente invention concerne un dispositif permettant la règlage des ceintures de securité pour automobiles, par la manipulation de boutons pression.

Il a pour but de supprimer la pression de la ceinture sur la poitrine des passagers.

Ce dispositif ne change par rapport à la presentation habituelle des dispositifs actuellement diffusés que par l'existence dans le milieu de la ceinture de boutons pression.

Ce dispositif se compose essentiellement tel que présenté par les dessins annexés :

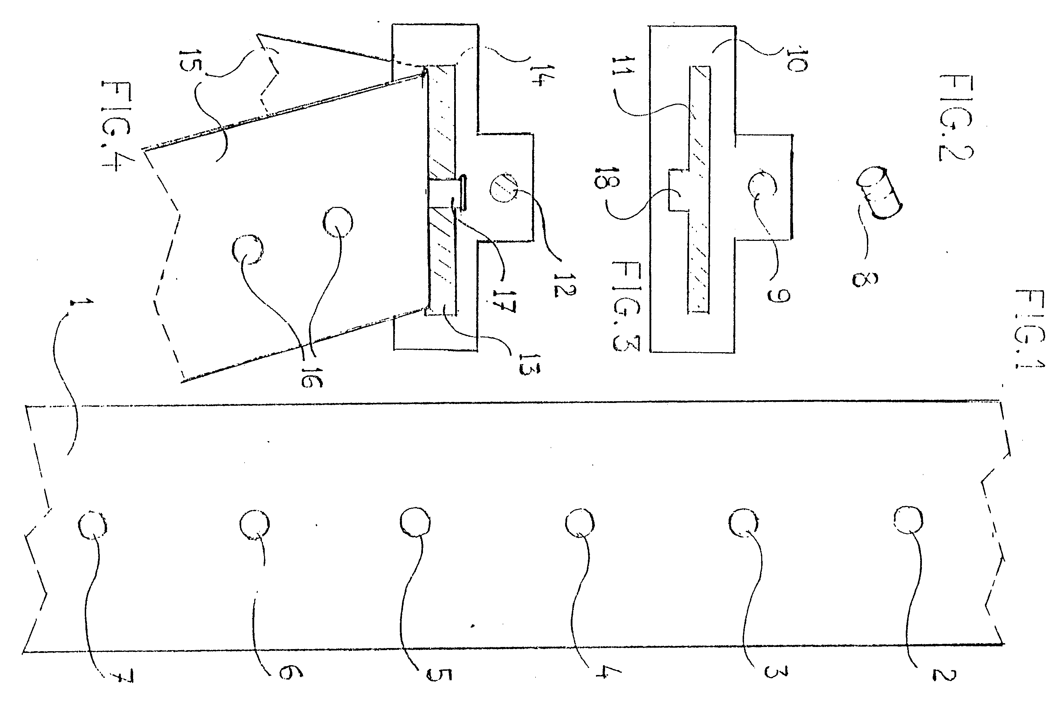

1. de la ceinture(1.Fig.1) comportant des boutons pression (2.3.4.5.6.7. Fig.1 et (16.17 Fig.4)

2. du guide de passage, entre les portes ou à l'arrière, à hauteur des vitres (10 Fig.3 et 14 Fig.4) fixé par boulon à la carrosserie (9 Fig.3 et 13 Fig.4) avec une encoche sur un seul côté (18 Fig.3).

La presentation isolée du bouton-pression est produite (8 Fig.2).

Ce dispositif se caractérise par l'existence dans le milieu de la ceinture (1 Fig.1 et15 Fig.4) de plusieurs boutons pression (2.3.4.5.6.7. Fig.1 et 16 Fig.4) qui, poussés d'un côté ou de l'autre, permettent à la ceinture, soit de glisser, grâce à l'encoche (18 Fig.3) dans l'orifice (11 Fig.3 et 13 Fig.4) du guide de passage de ceinture (10 Fig.3 et 14 Fig.4) fixé par boulor (9 Fig.3 et 12 Fig.4) entre les portières ou sur la carrosserie, au niveau des vitres, soit de bloquer la ceinture.

Le dessin Fig.4 présente la ceinture (15 Fig4) avec des boutons pression (16 Fig.4) positionnée dans le guide de passage (14 Fig.4) avec sa fixa tion 12 Fig.4) et son orifice 13 Fig.4). Le bouton choisi (17 Fig.4) poussé à l'opposé de l'encoche empêche la ceinture de glisser et la bloque au niveau désiré par l'utilisateur.

Ce blocage n'empêche pas la mobilité de ce dernier.

permettant le règlage de son ampleur.

3.Dispositif selon les revendications 1. et2. caractèrisée en ce que le guide de passage de la ceinture (10 Fig.3 et 14 Fig.4) comprend un orifice (11 Fig.3 et 13 Fig.4) laissant glisser la ceinture et comprenant une encoche (18 Fig.3) permettant le glissement dans le cas où les boutons pression sont abaissés, et le blocage de la ceinture au niveau souhaité dans le cas où un bouton pression est levé (17 Fig.4).

**Revendications**

1.Dispositif de ceinture de sécurité automobile règlable par boutons-pression caractérisé par l'existence dans le milieu de la ceinture (1.Fig.1 et15 Fig.4) de plusieurs boutons pression (2.3.4.5.6.7.Fig.1, 8.Fig 2 et 16 Fig.4), qui, poussés d'un côté ou de l'autre permettent à la ceinture, soit de glisser grâce à l'encoche (18 Fig.3) dans l'orifice (11 Fig.3)et 13 Fig.4) fixé par boulon (9 Fig.3 et 12 Fig.4) entre les portières ou sur la carrosserie au niveau des vitres, soit de bloquer la ceinture.

2.Dispositif selon la revendication 1 caractérisée en ce que la ceinture comporte plusieurs boutons pression insèrés dans son milieu

FIG.1

FIG.2

8

10

9

11    18    FIG.3

14    12    17    13

15    16

FIG.4

1

2

3

4

5

6

7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-U-8 522 656 (SCHMELZER) <br> * Page 4, lignes 4-8; figure 3 * <br> ----- | 1,2 | B 60 R 22/44 |

**DOMAINES TECHNIQUES RECHERCHES (Int. Cl.4)**

B 60 R

Le présent rapport a été établi pour toutes les revendications

| Lieu de la recherche | Date d'achèvement de la recherche | Examinateur |
|---|---|---|
| LA HAYE | 12-12-1988 | MAUSSER,T. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)